# EUROPEAN PATENT APPLICATION

(11) **EP 1 612 688 A2**
(43) Date of publication of application: **04.01.2006**
(21) Application number: 05020242.3
(22) Date of filing: 12.03.2004
(51) Int. Cl.: G06F 13/18, G06F 13/362, H04L 12/56

(54) **Method and apparatus for allocating transmission bandwidth on a data bus based on priorities**

(30) Priority: 12.03.2003 JP 2003066770; 29.01.2004 JP 2004020891
(62) Divisional of application: 04005916.4
(71) Applicant: MATSUSHITA ELECTRIC INDUSTRIAL CO., LTD., Kadoma-shi, Osaka 571-8501 (JP)
(72) Inventor: Yamauchi, Shinichiro, Takatsuki-shi Osaka 569-0081 (JP); Matsuda, Toshihide, Kyotanabe-shi Kyoto 610-0361 (JP)
(74) Representative: Grünecker, Kinkeldey, Stockmair & Schwanhäusser Anwaltssozietät

(57) **Abstract**

The invention relates to a transmitting/receiving method, apparatus and system for segmentation (reassembling) of data, interleaving and transmitting/(receiving) the divided data to (from) a bus, wherein the system schedules data based on assigned priorities onto a recoding medium.

## Description

### BACKGROUND OF THE INVENTION

### 1. Field of the invention

The present invention relates to a data communication method and a data communication apparatus.

### 2. Description of the related art

Digitalization of contents in recent years has brought various benefits, such as the achievement of high-quality music and videos and sharing of information via the Internet. On the other hand, however, there occur problems, such as tampering and unauthorized use of data, which have now become a matter of public concern.

In order to address these problems, there have been established the SDIO standards, in which the technique used in an SD (Secure Digital) memory card furnished with a highly sophisticated copyright protecting function including the two-way authentication technique is extended for use in the interface. A data communication system extended for the Bluetooth, a promising wireless communication technique, has been known as one of those in compliance with the standards.

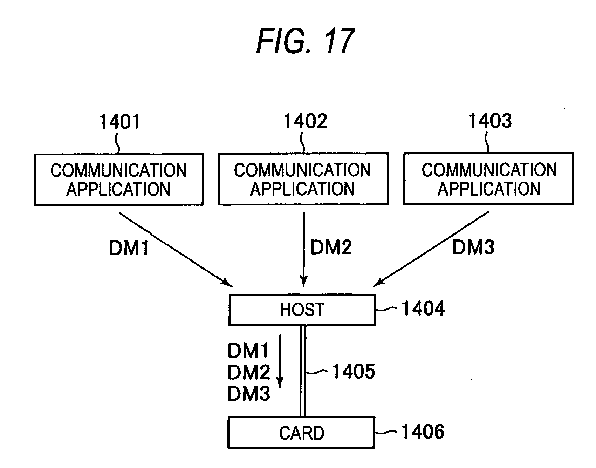

FIG. 17 is a block diagram showing the configuration of a conventional data communication system. Referring to FIG. 17, communication applications 1401, 1402, and 1403 transmit data messages DM to an SDIO Bluetooth host 1404. The SDIO Bluetooth host (hereinafter, simply referred to as the host) 1404 transmits the data messages received from the communication applications 1401, 1402, and 1403 to an SDIO Bluetooth card (hereinafter, simply referred to as the card) 1406 in the FIFO (First In, First out) manner.

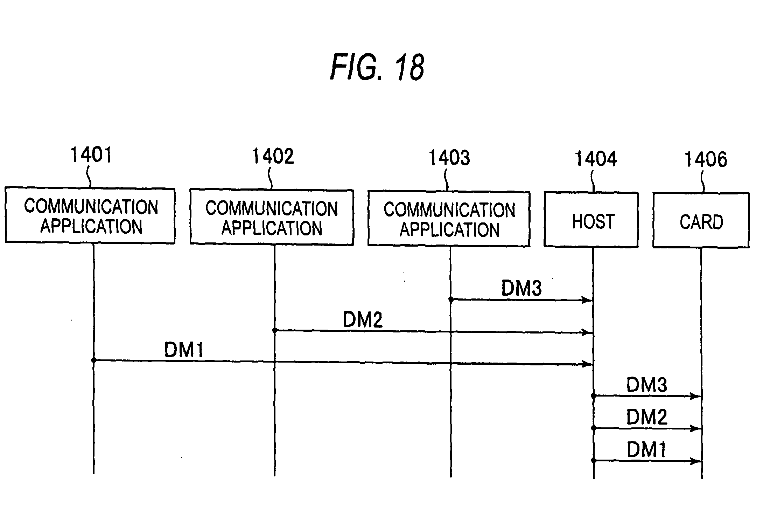

FIG. 18 is a view showing the sequence of operations of the conventional data communication system. In this drawing, a direction from top to bottom of the drawing is used as the time axis. Referring to FIG. 18, assume that the host 1404 receives a data message DM3, a data message DM2, and a data message DM1 in this order, then the host 1404 transmits the data message DM3, the data message DM2, and the data message DM1 to the card 1406 in this order.

Upon receipt of the data messages, the card 1406 transmits the data messages to a remote communication application (not shown) through the use of the Bluetooth device. Also, data messages from the remote communication application are first received by the card 1406 via the Bluetooth device and then transmitted to the host 1404 in the FIFO manner. The host 1404 then transmits the data messages to the corresponding communication applications.

Incidentally, there has been proposed a technique for transmitting plural kinds of data sequentially in order of decreasing priorities (for example, see JP-A-10-112856 (page 5, FIG. 3 and FIG. 4)).

The conventional data communication system, however, has problems as follows. That is, in a case where plural applications are launched on the SDIO Bluetooth host side, the transfer rate of each application is reduced, which in turn provides considerable adverse effects to an application having a high real-time characteristic, such as a TV conference and a surveillance camera.

For example, referring to FIG. 17, assume that the communication application 1401 is a communication application having a high real-time characteristic, such as a surveillance camera and a TV conference or telephone, and the communication application 1402 is a communication application for transferring files or the like that need not to be transmitted in real time. Then, when the communication application 1401 and the communication application 1402 are present on the host 1404 and are to be launched at the same time, the application 1401 is not able to perform communications between the host 1404 and the card 1406 while the communication application 1402 is performing communications between the host 1404 and the card 1406, that is, while the application 1402 is occupying an SD bus 1405, or in short, until the SD bus 1405 becomes available. This causes the transfer rate of the application 1401 to be reduced, which in turn impairs the real-time characteristic.

### SUMMARY OF THE INVENTION

The invention was devised in view of the foregoing, and therefore has an object to provide a data communication method and a data communication apparatus capable of launching communication applications without impairing the real-time characteristic of a communication application having a high real-time characteristic in a case where plural communication applications including a communication application having a high real-time characteristic are present and to be launched at the same time.

A data communication method according to a first aspect of the invention is a data communication method of transmitting data from a communication application to a recording medium, characterized by including: assigning priorities to data to be transmitted from plural communication applications; and judging the assigned priorities upon receipt of the data transmitted from each of the plural communication applications, and transmitting the data to the recording medium in order of decreasing priorities.

According to this method, by assigning priorities to data to be transmitted from the communication applications and performing transmission of data from the communication applications in order of decreasing priorities, it is possible to transmit data having a higher priority preferentially, and for example, data having a high real-time characteristic can be transmitted without impairing the real-time characteristic.

A data communication method according to a second aspect of the invention is a data communication method according to the first aspect of the invention, characterized by further including: dividing the received data into plural data pieces; and transmitting, upon receipt of data having a higher priority than the data already received while the divided data pieces are being transmitted time-sequentially, the data having the higher priority than the data already received after transmission of a data piece being transmitted is completed, and resuming transmission of remaining data pieces after transmission of the data is completed.

According to this method, because the data from the communication applications is divided into data pieces of an adequate size, even when data having a higher priority is received while data having a lower priority is being transmitted, transmission can be shifted to transmission of the data having a higher priority in a relatively short waiting time. It is thus possible to achieve the higher real-time characteristic than that in the data communication method according to the first aspect of the invention.

A data communication method according to a third aspect of the invention is a data communication method according to the first or second aspect of the invention, characterized in that, upon receipt of plural kinds of data having equal priorities, data pieces of the plural kinds of data are transmitted by turns.

According to this method, even when plural communication applications having equal priorities are to transmit data at the same time, plural data pieces obtained by dividing data from the respective communication applications are transmitted by turns. It is thus possible to perform data communications without impairing the real-time characteristic.

A data communication apparatus according to a fourth aspect of the invention is a data communication apparatus for transmitting data from a communication application to a recording medium, characterized by including: data receiving means for receiving data transmitted from each of plural communication applications; priority judging means for judging priorities assigned to plural kinds of data received by the data receiving means; and data transmitting means for transmitting the plural kinds of data received by the data receiving means to the recording medium in order of decreasing priorities on the basis of a judging result by the priority judging means.

According to this arrangement, by performing transmission of data from the communication applications in order of decreasing priorities, it is possible to transmit data having a higher priority preferentially, and for example, data having a high real-time characteristic can be transmitted without impairing the real-time characteristic.

A data communication apparatus according to a fifth aspect of the invention is a data communication apparatus according to the fourth aspect of the invention, characterized by further including; data dividing means for dividing the data received by the data receiving means into plural data pieces, wherein, upon receipt of data having a higher priority than the data while the divided data pieces are being transmitted time-sequentially, the data transmitting means transmits the data having the higher priority after transmission of a data piece being transmitted is completed, and resumes transmission of remaining data pieces after transmission of the data is completed.

According to this arrangement, because the data from the communication applications is divided into data pieces of an adequate size, even when data having a higher priority is received while data having a lower priority is being transmitted, transmission can be shifted to transmission of the data having a higher priority in a relatively short waiting time. It is thus possible to achieve the higher real-time characteristic than that in the data communication apparatus according to the fourth aspect of the invention.

A data communication apparatus according to a sixth aspect of the invention is a data communication apparatus according to the fourth or fifth aspect of the invention, characterized in that, upon receipt of plural kinds of data having equal priorities, the data transmitting means transmits data pieces of the plural kinds of data by turns.

According to this arrangement, even when plural communication applications having equal priorities are to transmit data at the same time, plural data pieces obtained by dividing data from the respective communication applications are transmitted by turns. It is thus possible to perform data communications without impairing the real-time characteristic.

A data transmitting method according to a seventh aspect of the invention is characterized by including: receiving data transmitted from each of plural communication applications; dividing each of plural kinds of received data into plural data pieces; generating a new kind of data by exchanging data pieces between one of the plural kinds of data and another kind of data each being divided into plural data pieces; dividing each new kind of data equally by a numerical value corresponding to the number of bits in a data bus; and transmitting all of the divided data pieces at a same time via the data bus.

According to this method, because the data bus can be allocated to transmission of data from particular communication applications, it is possible to perform transmission of plural kinds of data in real time without any waiting time.

A data receiving method according to an eighth aspect of the invention is characterized by including: receiving plural data pieces transmitted at a same time via the data bus by the data transmitting method according to Claim 7, and restoring the plural data pieces into one kind of data; and exchanging the data pieces in inverse between the restored data and another kind of data, with which the data pieces have been exchanged, and thereby restoring the restored data to original data.

According to this method, it is possible to restore the data processed by the data transmitting method according to the seventh aspect of the invention to original data.

A data transmitting apparatus according to a ninth aspect of the invention is characterized by including: receiving means for receiving data transmitted from each of plural communication applications; first data dividing means for dividing each of plural kinds of data received by the receiving means into plural data pieces; data exchanging means for exchanging data pieces between the data divided into plural data pieces by the first data dividing means and another data also divided into plural data pieces, and thereby generating new kinds of data; second data dividing means for dividing each new kind of data generated by the data exchanging means equally by a numerical value corresponding to the number of bits in a data bus; and transmitting means for transmitting all of the data pieces generated by the second data dividing means at a same time via the data bus.

According to this arrangement, because the data bus can be allocated to transmission of data from particular communication applications, it is possible to perform transmission of plural kinds of data in real time without any waiting time.

A data receiving apparatus according to a tenth aspect of the invention is characterized by including: receiving means for receiving plural data pieces transmitted at a same time via the data bus from the data transmitting apparatus according to the ninth aspect of the invention; first data restoring means for restoring plural data pieces received by the receiving means to one kind of data; and second data restoring means for exchanging the data pieces in reverse between the data restored by the first data restoring means and another kind of data, with which the data pieces have been exchanged, and thereby restoring the restored data to original data.

According to this arrangement, it is possible to restore the data processed by the data transmitting apparatus according to the ninth aspect of the invention to original data.

A data communication system according to an eleventh aspect of the invention is characterized by including: the data transmitting apparatus according to the ninth aspect of the invention; and the data receiving apparatus according to the tenth aspect of the invention.

According to this arrangement, it is possible to provide a data communication system capable of transmitting data from plural communication applications in real time without any waiting time.

A data communication method according to a twel fth aspect of the invention is a data communication method for transmitting data from a communication application to a recording medium, characterized by including: monitoring a quantity of data stream of data to be transmitted from the communication application; and increasing/decreasing allocation of a data bus to the communication application dynamically depending on the quantity of data stream.

According to this method, by dynamically increasing/decreasing allocation of the data bus to the communication application depending on a quantity of data stream of data to be transmitted from the communication application, it is possible to transmit, for example, data having a high real-time characteristic without impairing the real-time characteristic.

A data communication system according to a thirteenth aspect of the invention is characterized in that it performs the data communication method according to the first aspect of the invention, and is characterized by including: the data transmitting apparatus according to the ninth aspect of the invention; and the data receiving apparatus according to the tenth aspect of the invention.

According to this arrangement, it is possible to provide a data communication system capable of transmitting data from plural communication applications in real time without any waiting time.

A data communication system according to a fourteenth aspect of the invention is characterized in that it performs the data communication method according to the twelfth aspect of the invention, and is characterized by including: the data transmitting apparatus according to the ninth aspect of the invention; and the data receiving apparatus according to the tenth aspect of the invention.

According to this arrangement, it is possible to provide a data communication system capable of transmitting data from plural communication applications in real time without any waiting time.

A data communication system according to a fifteenth aspect of the invention is characterized in that it performs the data communication method according to the first aspect of the invention and the data communication method according to the twelfth aspect of the invention, and is characterized by including: the data transmitting apparatus according to the ninth aspect of the invention; and the data receiving apparatus according to the tenth aspect of the invention.

According to this arrangement, it is possible to provide a data communication system capable of transmitting data from plural communication applications in real time without any waiting time.

According to the data communication method of the invention, because priorities are assigned to data to be transmitted from the communication applications and transmission of data from the communication applications is performed in order of decreasing priorities, it is possible to transmit data having a higher priority preferentially, and for example, data having a high real-time characteristic can be transmitted without impairing the real-time characteristic.

According to the data communication apparatus of the invention, because transmission of data from the communication applications is performed in order of decreasing priorities, it is possible to transmit data having a higher priority preferentially, and for example, data having a high real-time characteristic can be transmitted without impairing the real-time characteristic.

According to the data transmitting method of the invention, because the data bus is allocated to transmission of data from particular communication applications, it is possible to perform transmission of plural kinds of data in real time without any waiting time.

According to the data receiving method of the invention, it is possible to restore the data processed by the data transmitting method of the invention to original data.

According to the data transmitting apparatus of the invention, because the data bus can be allocated to transmission of data from particular communication applications, it is possible to perform transmission of plural kinds of data in real time without any waiting time.

According to the data receiving apparatus of the invention, it is possible to restore the data processed by the data transmitting apparatus of the invention to original data.

According to the data communication system of the invention, it is possible to provide a data communication system capable of transmitting data from plural communication applications in real time without any waiting time.

### BRIEF DESCRIPTION OF THE DRAWINGS

FIG. 1 is a block diagram showing the configuration of a data communication system according to a first embodiment of the invention.
FIG. 2 is a view showing the sequence of data messages in the data communication system according to the first embodiment of the invention.
FIG. 3 is a view showing the format of a data message used in the data communication system according to the first embodiment of the invention.
FIG. 4 is a view showing the sequence of data messages, used to explain a problem in the data communication system according the first embodiment of the invention.
FIG. 5 is a block diagram showing the configuration of a data communication system according to a second embodiment of the invention.
FIG. 6 is a view used to explain division of a data message in the data communication system according to the second embodiment of the invention.
FIG. 7 is a view showing the sequence of data messages in the data communication system according to the second embodiment of the invention.
FIG. 8 is a block diagram showing the configuration of a data communication system according to a third embodiment of the invention.
FIG. 9 is a view showing the sequence of data messages in the data communication system according to the third embodiment of the invention.
FIG. 10 is a view showing the sequence of data messages in a modification of the data communication system according to the third embodiment of the invention.
FIG. 11 is a block diagram showing the configuration of a data communication system according to a fourth embodiment of the invention.
FIG. 12 is a view used to explain advantages of the data communication system according to the fourth embodiment of the invention.
FIG. 13 is a view used to explain operations of the data communication system according to the fourth embodiment of the invention.
FIG. 14 is a block diagram showing the configuration of a data communication system according to a fifth embodiment of the invention.
FIG. 15 is a block diagram showing the configuration of a data communication system according to a sixth embodiment of the invention.
FIG. 16 is a block diagram showing the configuration of a data communication system according to a seventh embodiment of the invention.
FIG. 17 is a block diagram showing the configuration of a conventional data communication system.
FIG. 18 is a view showing the sequence of data messages in the conventional data communication system.

### DESCRIPTION OF THE PREFERRED EMBODIMENTS

Embodiments of the invention will now be described in detail with reference to the accompanying drawings.

### (First Embodiment)

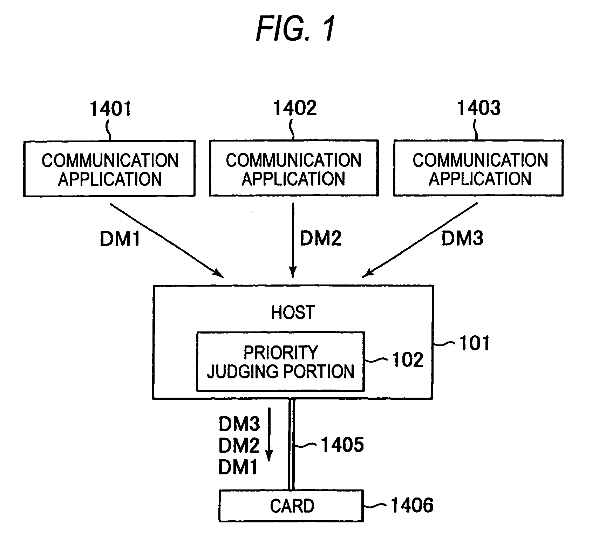

FIG. 1 is a block diagram showing the configuration of a data communication system according to a first embodiment of the invention. Referring to FIG. 1, communication applications 1401 through 1403 assign priorities to their respective data messages DM, and transmit the data messages DM to an SDIO Bluetooth host (hereinafter, simply referred to as the host) 101. The host 101 then judges the priorities of the data messages DM thus received in a priority judging portion 102, and transmits the data messages to an SDIO Bluetooth card (hereinafter, simply referred to as the card) 1406 in order of decreasing priorities. Herein, assume that a data message DM1, a data message DM2, and a data message DM3 are in order of decreasing precedence.

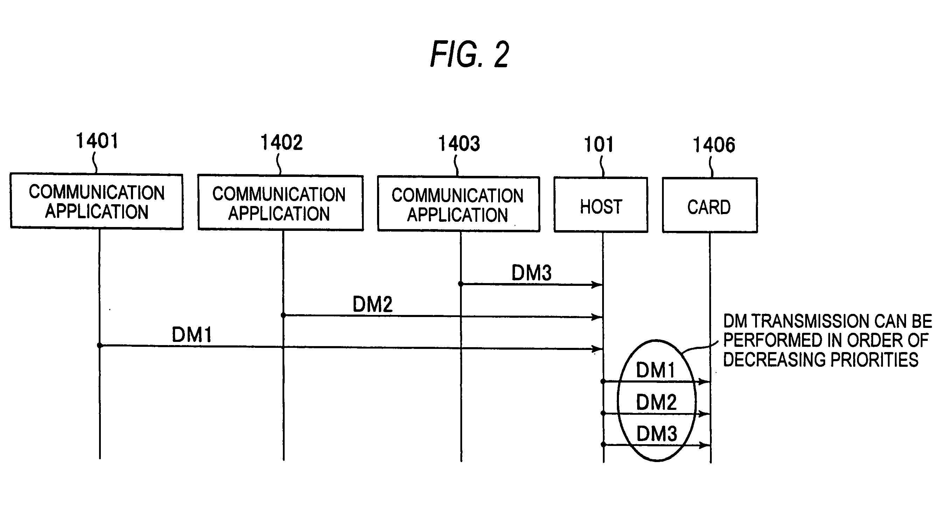

FIG. 2 is a view showing the sequence of data messages in the data communication system according to this embodiment. As is shown in the drawing, the host 101 receives the data message DM3, the data message DM2, the data message DM1 from the communication applications 1401 through 1403 in this order. The host 101 then transmits first the data message DM1 assigned with the highest priority to the card 1406.

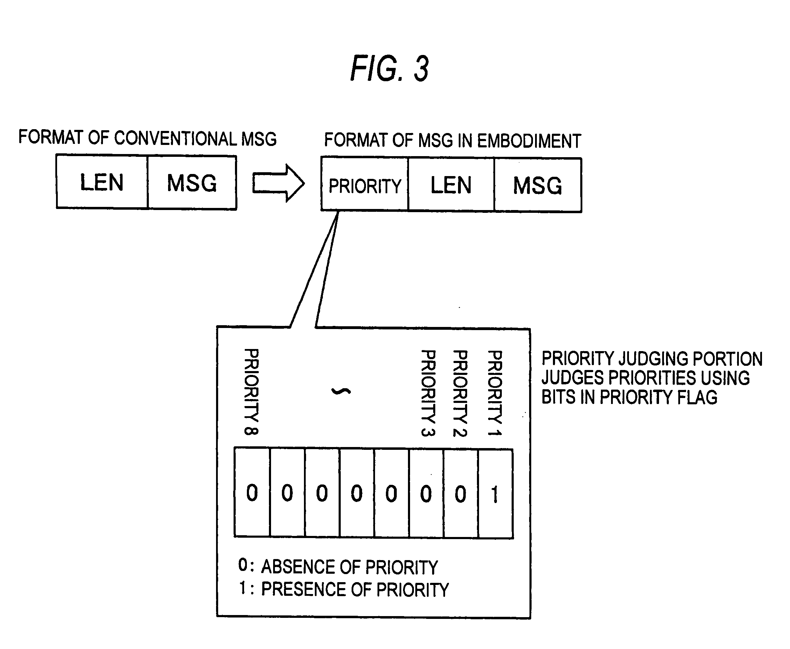

FIG. 3 is a view showing the format of the data message DM used in the data communication system according to this embodiment. As is shown in the drawing, the data message DM has a field indicating the priority; the priority assigned to the data message DM is indicated by which of the bits in the field is set to "1". It should be noted that the conventional data message DM does not have any field such that indicates the priority.

As has been described, the data communication system according to this embodiment assigns a higher priority to the data message DM having a high real-time characteristic and transmits the data messages DM having a higher priority to the card 1406 in order of decreasing priorities. It is thus possible to launch plural communication applications sequentially without impairing the real-time characteristic.

### (Second Embodiment)

A data communication system according to a second embodiment of the invention will now be described.

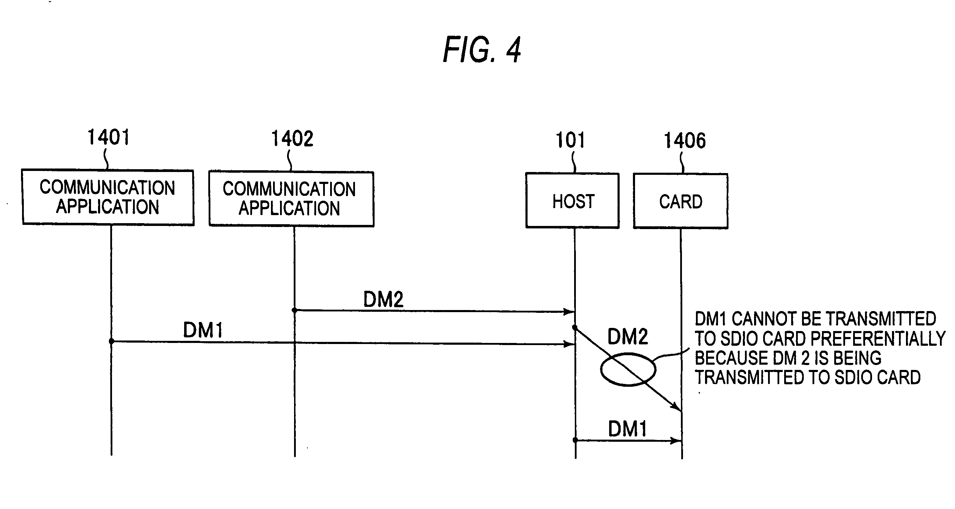

In the data communication system according to the first embodiment above, once the host 101 starts transmission of the data message DM2 over the SD bus 1405, the data message DM1 received while the data message DM2 is being transmitted cannot be transmitted until the transmission of the data message DM2 is completed. For example, referring to FIG. 4, even when the data message DM1 has the higher priority than the data message DM2, the transmission of the data message DM2 has already started when the host 101 receives the data message DM1, and the host 101 is not able to transmit the data message DM1 preferentially. When the data size of the data message DM2 is large, in particular, the SD bus 1405 is occupied longer, which poses a problem in transfer rate of the communication application 1401.

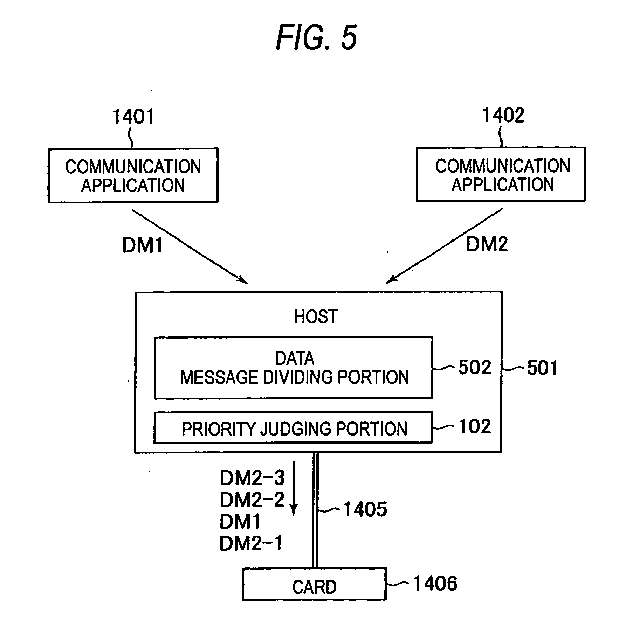

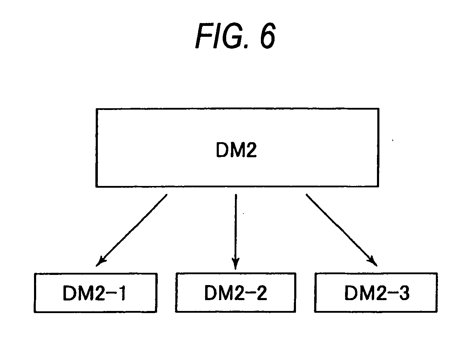

FIG. 5 is a block diagram showing the configuration of the data communication system according to the second embodiment of the invention. Referring to FIG. 5, the data communication system according to this embodiment includes a host 501 that houses a data message dividing portion 502, so that the data message DM is divided into data pieces of an adequate size in the data message dividing portion 502. FIG. 6 is a view showing an example when the data message DM2 is divided into data pieces. As is shown in the drawing, the data message DM2 is divided into three data pieces: DM2-1, DM2-2, and DM2-3.

In this embodiment, in a case where the data message DM1, having the higher priority than the data message DM2, is received before the transmission of the data piece DM2-1 of the data message DM2 is completed, data transmission of the data message DM1 is started in order of decreasing priorities, after the data transmission of the data piece DM2-1 is completed. Likewise, in a case where the data message DM1 is received while the data piece DM2-2 is being transmitted, data transmission of the data message DM1 is started after the data transmission of the data piece DM2-2 is completed.

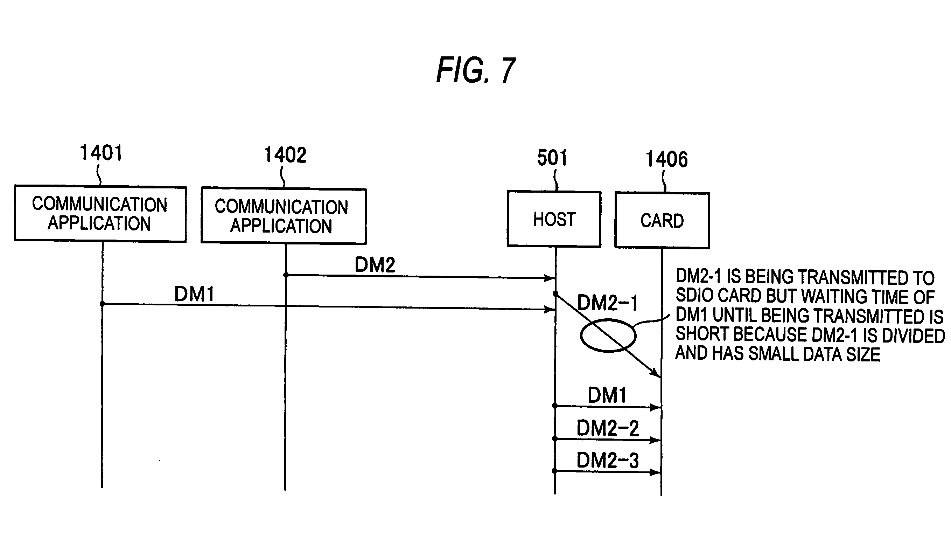

FIG. 7 is a view showing the sequence of data messages in the data communication system according to this embodiment. Referring to FIG. 7, for example, transmission of the divided data piece DM2-1 has already started when the data message DM1 is received. However, the data piece DM2-1 naturally has a smaller size than the entire data message DM2, and therefore occupies the SD bus 1405 for only a short time. When the transmission of the data piece DM2-1 is completed, the data message DM1 is transmitted in order of decreasing priorities.

As has been described, the data communication system according to this embodiment divides the data message DM into data pieces of an adequate size, so that even when a data message having a higher priority is received while a data message having a lower priority is being transmitted, transmission can be shifted smoothly to transmission of the data message having the higher priority in a relatively short waiting time. It is thus possible to achieve the higher real-time characteristic than in the data communication system according to the first embodiment.

### (Third Embodiment)

A data communication system according to a third embodiment of the invention will now be described.

In the data communication systems according to the first and second embodiments above, in a case where plural communication applications having equal priorities are present, the hosts 101 and 501 transmit data messages to the card 1406 in the FIFO manner as in the conventional communication method due to the equal priorities. This, however, poses an issue similar to that in the conventional method.

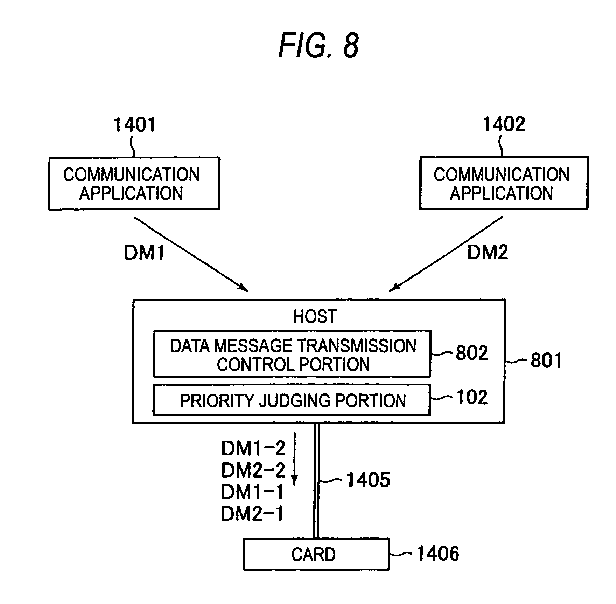

FIG. 8 is a block diagram showing the configuration of a data communication system according to the third embodiment of the invention. Referring to FIG. 8, the data communication system according to the this embodiment includes, in addition to the data message dividing function furnished to the data communication system according to the second embodiment above, a host 801 that houses a data message transmission control portion 802 transmitting divided data messages by turns in a case where there are plural communication applications having equal priorities, so that the data messages are divided into data pieces and the divided data pieces are transmitted by turns by means of the data message transmission control portion 802. It is thus possible to transmit data messages equally to the card 1406.

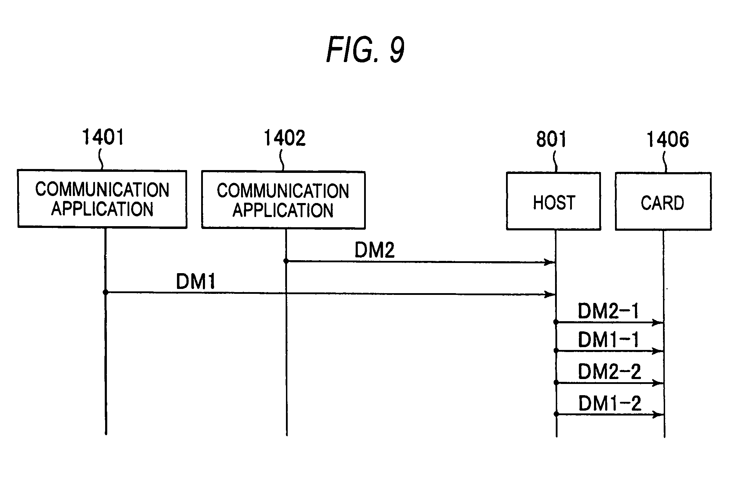

For example, in a case where the host 801 receives the data message DM2 from the communication application 1402 and the data message DM1 from the communication application 1401 in this order and the data message DM1 and the data message DM2 have equal priorities, the data messages are transmitted to the card 1406 in order of reception in the conventional method. Contrary to this, in this embodiment, for example, as is shown in FIG. 9, which is the view showing the sequence of data messages, each of the data messages DM1 and DM2 is divided into two data pieces and a data piece DM1-1 and a data piece DM1-2, and a data piece DM2-1 and a data piece DM2-2 are thereby generated. Then, the data piece DM2-1, the data piece DM1-1, the data piece DM2-2, and the data piece DM1-2 are transmitted to the card 1406 by turns in this order.

As has been described, the data communication system according to this embodiment, even when plural communication applications having equal priorities are to be launched at the same time, data messages from the respective communication applications are divided into plural data pieces, and the divided data pieces are transmitted by turns. It is thus possible to perform data communications without impairing the real-time characteristic.

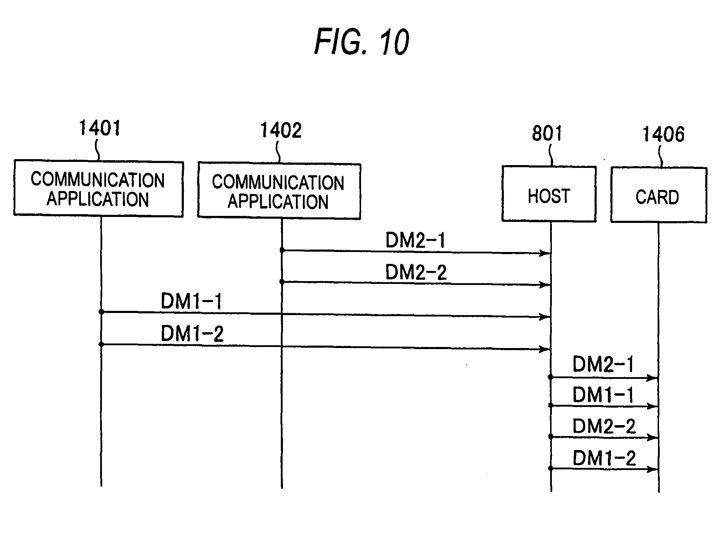

In this embodiment, the data message transmission control portion 802 in the host 801 divides each of the data messages DM1 and DM2 from the communication applications 1401 and 1402, respectively, into plural data pieces and transmits the divided data pieces by turns. However, for example, as is shown in FIG. 10, which is the view showing the sequence of data messages, in a case where two divided data pieces DM2-1 and DM2-2 and two divided data pieces DM1-1 an DM1-2 are transmitted from the communication applications 1402 and 1401, respectively, these data pieces are simply transmitted by turns.

To be more specific, assume that the host 801 receives the data pieces DM1-1 and DM1-2 of the data message DM1 from the communication application 1401, as well as the data pieces DM2-1 and DM2-2 of the data message DM2 from the communication application 1402 in order of the data pieces DM2-1, DM2-2, DM1-1, and DM1-2, and the data messages DM1 and DM2 have equal priorities, then the host 801 transmits the data pieces DM2-1, DM1-1, DM2-2, and DM1-2 to the card 1406 by turns in this order.

Also, the first through third embodiments above were described with the use of the SDIO Bluetooth by way of example. However, the invention is not limited to this example, and the invention can be applied to any communication method as long as it is a system capable performing communications in compliance with the SDIO standards, and the similar advantages can be achieved.

### (Fourth Embodiment)

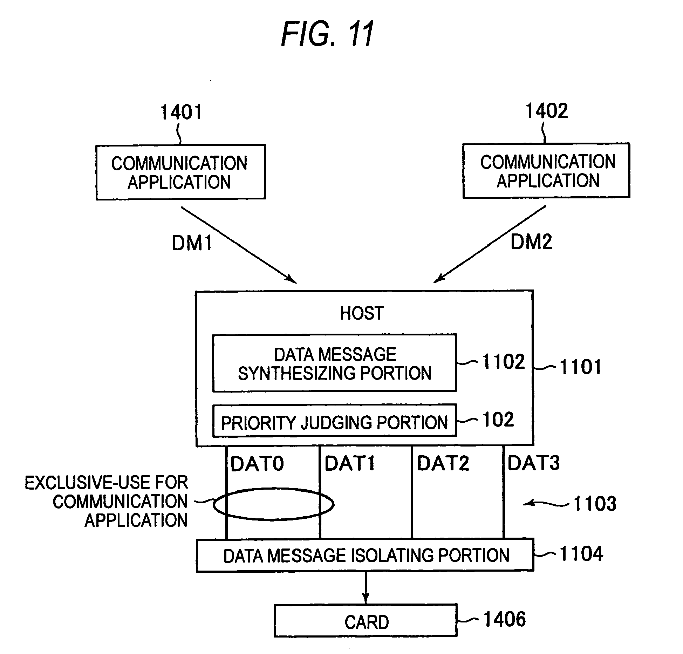

FIG. 11 is a block diagram showing the configuration of a data communication system according to a fourth embodiment of the invention. The data communication system according to the third embodiment above solved a problem in transfer rate caused when there are plural communication applications having equal priorities. However, because there is only one transmission path, it is difficult to prevent a reduction of the transfer rate completely.

Hence, the data communication system according to this embodiment is configured to enable communications without reducing the transfer rate even when there are plural communication applications having equal priorities. In other words, in a case where communications are performed between the card 1406 and a host 1101 in a 4-bit mode, the communication application is able to use two out of four 4-bit mode data buses for virtual, exclusive-use. It should be noted, however, that this case is applicable only to a data communication system of the 4-bit mode support.

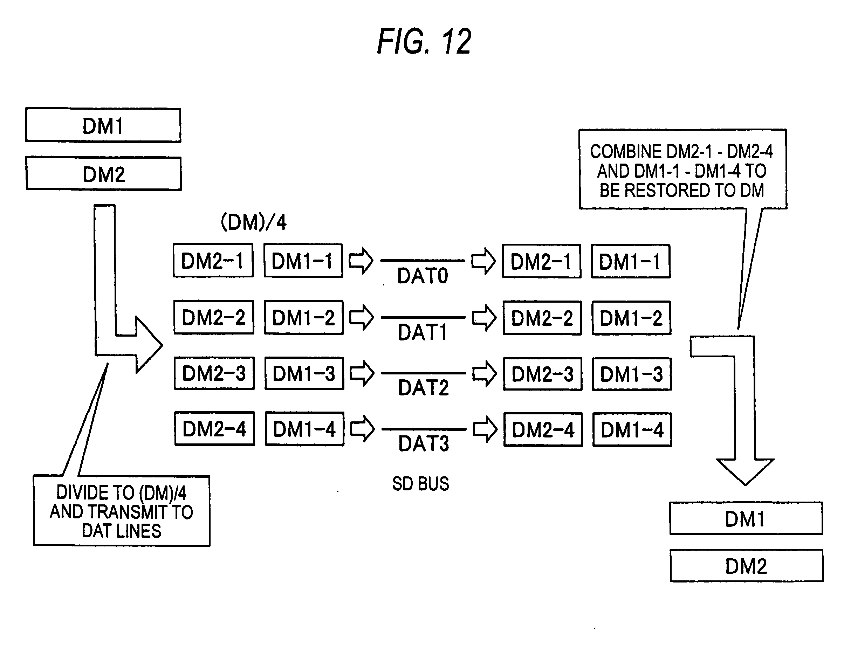

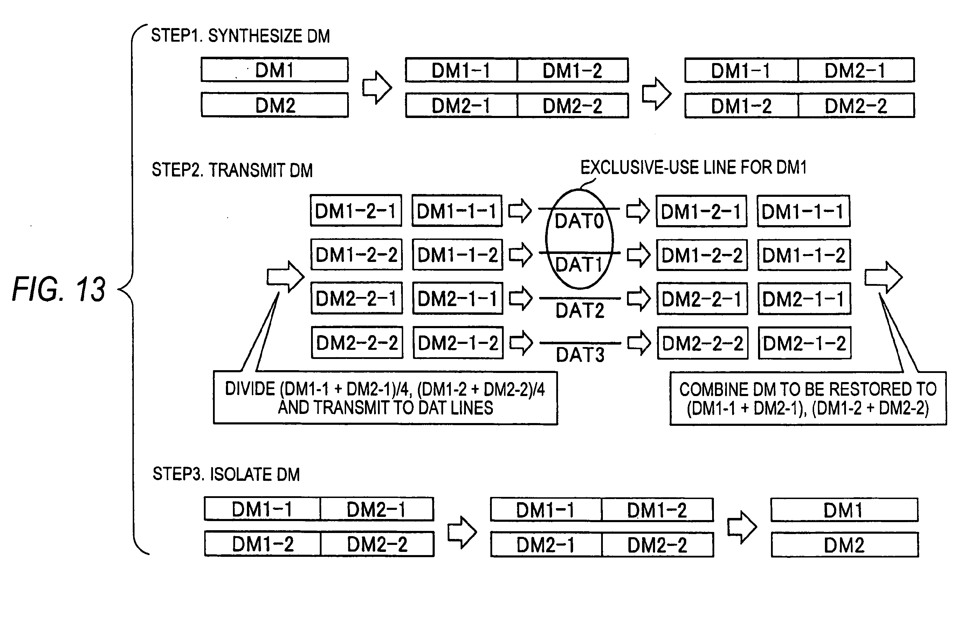

Operations in the 4-bit mode will now be described with reference to FIG. 12 and FIG. 13. FIG. 12 is a view used to explain operations of another data communication system without the function furnished to the data communication system of this embodiment. In this data communication system, in a case where the data messages DM1 and DM2 are transmitted and received between the card 1406 and the host 1101, a data message synthesizing portion 1102 divides each of the data messages DM1 and DM2 equally into four data pieces (that is, into DM1-1, DM1-2, DM1-3, and DM1-4 in the case of the data message DM1, and DM2-1, DM2-2, DM2-3, and DM2-4 in the case of the data message DM2), and transmits DM1-1 and DM2-1 to DAT0, DM1-2 and DM2-2 to DAT1, DM1-3 and DM2-3 to DAT2, and DM1-4 and DM2-9 to DAT3, in order from the L1AT0 in a data bus 1103, starting with the least significant bit (LSB).

On the reception side, a data message isolating portion 1104 receives data in order from the DAT0 in the data bus 1103, starting with the least significant bit, and generates the data messages DM1 and DM2. In this case, the data message DM1 is first transmitted to the card 1406, and then the data message DM2 is transmitted to the card 1406. In other words, after the data messages DM1-1, DM1-2, DM1-3, and DM1-4 are transmitted at a time, the date messages DM2-1, DM2-2, DM2-3, and DM2-4 are transmitted at a time. It should be noted that the communication method in the 4-bit mode is defined by the SDIO standards.

On the other hand, FIG. 13 is a view used to explain operations of the data communication system according to this embodiment. In this embodiment, the data message synthesizing portion 1102 (see FIG. 11) divides the data message DM1 into DM1-1 and DM1-2, and the date message DM2 into DM2-1 and DM2-2. The data message synthesizing portion 102 then synthesizes the data message DM1-1 and DM2-1, and the data messages DM1-2 and DM2-2, after which it outputs the data messages thus synthesized to the data bus 1103.

In a case where the data messages DM1-1 and DM2-1, and the data messages DM1-2 and DM2-2 synthesized in the data message synthesizing portion 1102 are transmitted and received between the card 1406 and the host 1101, the date messages DM1-1 and DM2-1, and the date messages DM1-2 and DM2-2 are individually divided equally into four data pieces (that is, into DM1-1-1, DM1-1-2, DM2-1-1, and DM2-1-2 in the case of the data messages DM1-1 and DM2-1, and into DM1-2-1, DM1-2-2, DM2-2-1, and DM2-2-2 in the case of the data messages DM1-2 and DM2-2), and DM1-1-1 and DM1-2-1 are transmitted to DAT0, DM1-1-2 and DM1-2-2 to DAT1, DM2-1-1 and DM2-2-1 to DAT2, and DM2-1-2 and DM2-2-2 to DAT3 in order from the DAT0 in the bus, starting with the least significant bit. In other words, the data message DM1 can use the DAT0 and DAT1 in the data bus, and the data message DM2 can use the DAT2 and DAT3 in the data bus as their respective exclusive-use transmission data buses.

On the reception side, the data message isolating portion 1104 performs the processing in inverse to the processing in the data message synthesizing portion 1102, and thereby restores the divided data messages to the original data messages. In other words, DM1-1, DM2-1, DM1-2, and DM2-2 are isolated, and restored to the original data messages DM1 and DM2.

As has been described, the data communication system according to this embodiment virtually allocates data bus to data messages from particular communication applications. It is thus possible to perform processing as if the data messages DM1 and DM2 were transmitted in real time without any waiting time.

### (Fifth Embodiment)

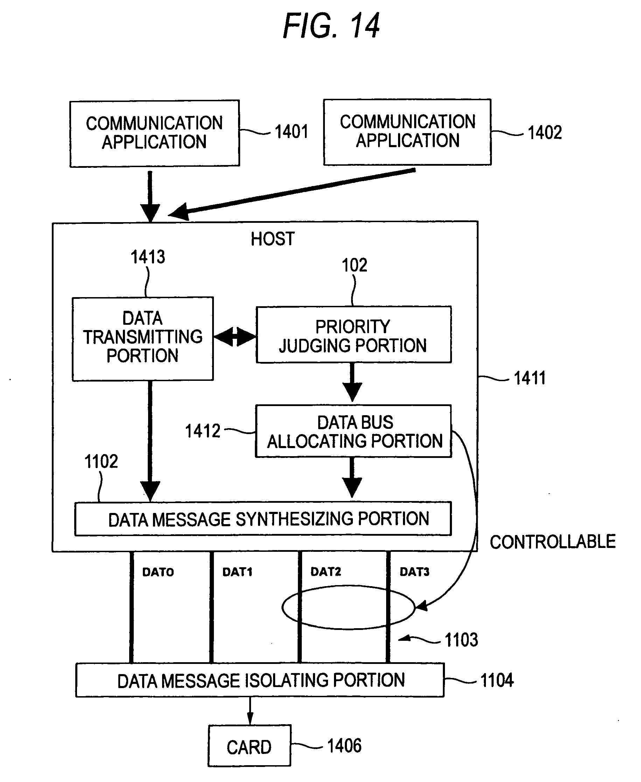

FIG. 14 is a block diagram showing the configuration of a data communication system according to a fifth embodiment of the invention. In the data communication system according to the fourth embodiment above, because allocation of data bus is static, it is difficult to use the bandwidth in the transmission path effectively. For example, in a case where the communication application uses two out of four 4-bit mode data buses for virtual, exclusive-use in the fourth embodiment above, the communication application occupies two out of four data buses virtually for exclusive use even when the communication application is not making any communication, and there is assumed a case where another application cannot effectively use the available bandwidth.

Hence, the data communication system according to this embodiment has an object to effectively use the bandwidth in the SD data bus. In other words, in a case where communications are performed between the card and the host, for example, in the 4-bit mode, a virtual, special line is allocated dynamically to the communication application to be used exclusively, so that an available bandwidth (data bus) can be used effectively.

Referring to FIG. 14, the communication applications 1401 and 1402 assign priorities to their respective data messages, and transmit the data messages to a host 1411. The host 1411 then judges the priorities of the data messages thus received in the priority judging portion 102, and controls a data bus allocating portion 1412 to allocate the data bus 1103 dynamically to the data message having a higher priority according to the priority judging result in the priority judging portion 102. When configured as described above, in a case where there are communications of a data message having a higher priority, two out of four data buses are allocated to this data message, so that the data message having a higher priority can be transmitted first. Also, in the absence of a data message having a higher priority, the data buses are not allocated, and therefore the data message having a lower priority can be transmitted with the use of an available bandwidth (data bus). It should be noted that the data transmitting portion 1413 is connected to each of the priority judging portion 102 and the data message synthesizing portion 1102.

As has been described, the data communication system according to this embodiment allows a data message having a higher priority to dynamically, exclusively use the data bus, so that the bandwidth in the data bus can be used effectively.

### (Sixth Embodiment)

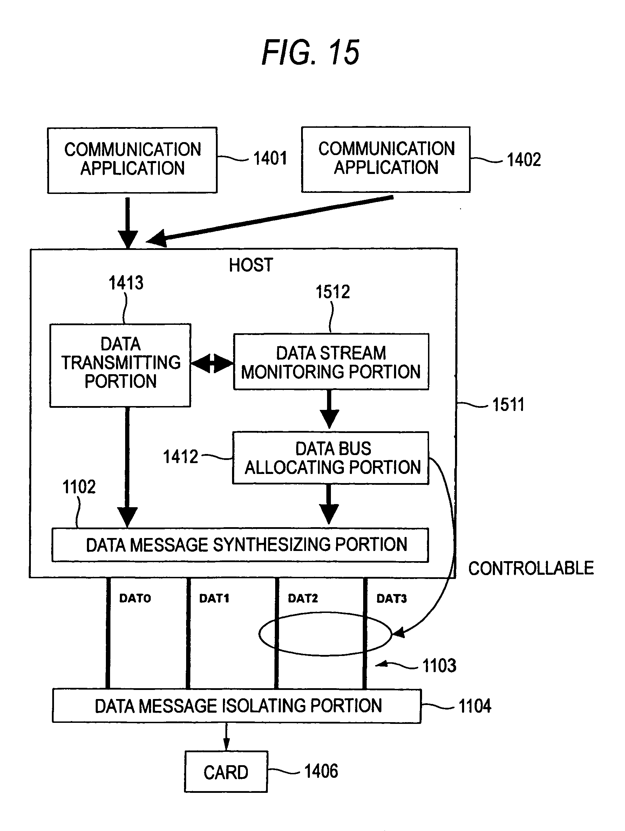

FIG. 15 is a block diagram showing the configuration of a data communication system according to a sixth embodiment of the invention, which is another configuration of the fifth embodiment above.

The data communication system according to this embodiment also has an object to use the bandwidth in the SD data bus effectively: In other words, in a case where communications are performed between the card and the host, for example, in the 4-bit mode, a virtual, special line is allocated dynamically to the communication application to be used exclusively, depending on a quantity of data stream.

Referring to FIG. 15, the communication applications 1401 and 1402 transmit their respective data messages to a host 1511. A quantity of data stream of each data message received in the host 1511 is monitored by a data stream monitoring portion 1512. In the presence of a communication application having a large quantity of data stream, such communications are judged as having a higher priority, and allocation of the data bus 1103 to this communication application is increased dynamically in the data bus allocating portion 1412. When a quantity of data stream is small, such communications are judged as having a lower priority, and allocation of the data bus 1103 to this communication application is reduced dynamically. It should be noted that the data transmitting portion 1413 is connected to each of the data stream monitoring portion 1512 and the data message synthesizing portion 1102.

As has been described, the data communication system according to this embodiment allows a communication application having a larger quantity of data stream to use the data bus exclusively and dynamically, so that the bandwidth in the data bus can be used effectively.

### (Seventh Embodiment)

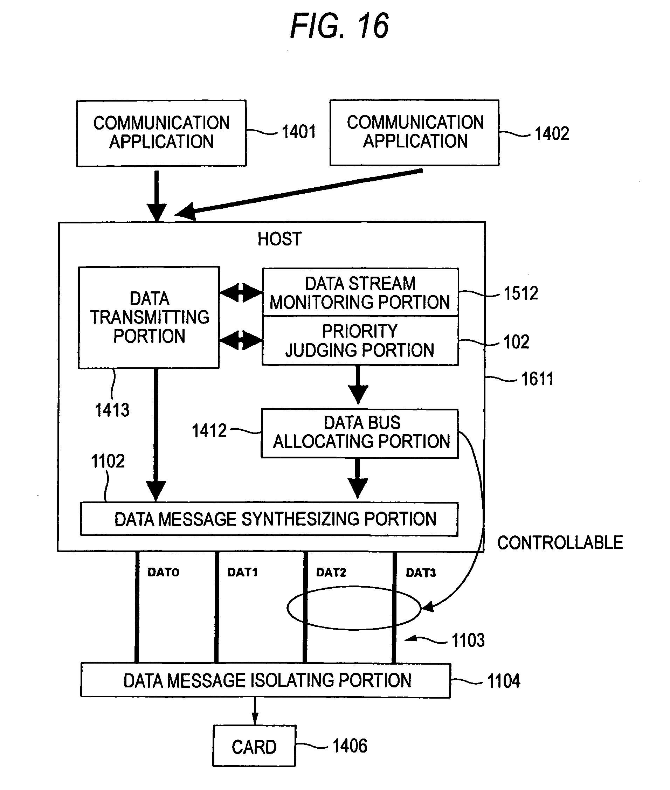

FIG. 16 is a block diagram showing the configuration of a data communication system according to a seventh embodiment of the invention. The seventh embodiment is another configuration of the fifth and sixth embodiments above.

The data communication system according to this embodiment makes it possible to use the bandwidth in the SD data bus effectively. In other words, in a case where communications are performed between the card and the host, for example, in the 4-bit mode, a virtual, special line is allocated dynamically to the communication application to be used exclusively.

Referring to FIG. 16, the communication applications 1401 and 1402 assign priorities to their respective data messages and transmit the data messages to a host 1611. The host 1611 then judges the priorities of the data messages thus received in the priority judging portion 102 with the use of their flags, and allocates dynamically the data bus 1103 to the data message having a higher priority, to be used exclusively, in the data bus allocating portion 1412. Likewise, the host 1611 monitors a quantity of data stream of each received data message in the data stream monitoring portion 1512. In the presence of a communication application having a larger quantity of data stream, such communications are judged as having a higher priority, and allocation of the data bus 1103 to this communication application is increased dynamically in the data bus allocating portion 1412. When a quantity of data stream is small, such communications are judged as having a lower priority, and allocation of the data bus 1103 to this communication application is reduced dynamically. It should be noted that the data transmitting portion 1413 is connected to each of the data stream monitoring portion 1512, the priority judging portion 102, and the data message synthesizing portion 1102.

As has been described, the data communication system according to this embodiment allows a communication application to dynamically use the data bus exclusively on the basis of two judgment criteria as to the priorities, so that the bandwidth in the data bus can be used effectively.

The judgment on the priority by the flag and the judgment on the priority by a quantity of data stream may be performed individually by the same system or performed selectively. It goes without saying that two judgment criteria as to the priorities can be selectively switched, for example, by a switch or may be changed dynamically depending on the nature of the application.

Each of the embodiments above described a case where data is transmitted from the host to the card by way of example. However, it goes without saying that the same description applies to data transmission from the card to the host.

The invention can provide an advantage that the real-time characteristic is not impaired during data communications, by transmitting communication data having a higher priority preferentially, and is therefore useful in a communication system in compliance with the SDIO standards.

## Claims

1. A data transmitting method, comprising:
receiving data transmitted from each of plural communication applications;
dividing each of plural kinds of received data into plural data pieces;
generating a new kind of data by exchanging data pieces between one of the plural kinds of data and another kind of data each being divided into plural data pieces;
dividing each new kind of data equally by a numerical value corresponding to the number of bits in a data bus; and
transmitting all of the divided data pieces at a same time via the data bus.

2. A data receiving method, comprising:
receiving plural data pieces transmitted at a same time via the data bus by the data transmitting method according to claim 1, and restoring the plural data pieces into one kind of data; and
exchanging the data pieces in inverse between the restored data and said another kind of data, with which the data pieces have been exchanged, and thereby restoring the restored data to original data.

3. A data transmitting apparatus, comprising:
receiving means for receiving data transmitted from each of plural communication applications;
first data dividing means for dividing each of plural kinds of data received by the receiving means into plural data pieces;
data exchanging means for exchanging data pieces between the data divided into plural data pieces by the first data dividing means and another data also divided into plural data pieces, and thereby generating new kinds of data;
second data dividing means for dividing each new kind of data generated by the data exchanging means equally by a numerical value corresponding to the number of bits in a data bus; and
transmitting means for transmitting all of the data pieces generated by the second data dividing means at a same time via the data bus.

4. A data receiving apparatus, comprising:
receiving means for receiving plural data pieces transmitted at a same time via said data bus from the data transmitting apparatus according to claim 3;
first data restoring means for restoring plural data pieces received by the receiving means to one kind of data; and
second data restoring means for exchanging the data pieces in reverse between the data restored by the first data restoring means and the another kind of data, with which the data pieces have been exchanged, and thereby restoring the restored data to original data.

5. A data communication system, comprising:
the data transmitting apparatus according to claim 3; and
the data receiving apparatus according to claim 4.

6. A data communication system for performing
a data communication method of transmitting data from a communication application to a recording medium, the method comprising:
assigning priorities to data to be transmitted from plural communication applications; and
judging the assigned priorities upon receipt of the data transmitted from each of said plural communication applications, and transmitting the data to said recording medium in order of decreasing priorities,
the system comprising:
the data transmitting apparatus according to claim 3; and
the data receiving apparatus according to claim 4.
